# EUROPÄISCHE PATENTSCHRIFT

(11) **EP 1 964 715 B1**
(45) Veröffentlichungstag und Bekanntmachung des Hinweises auf die Patenterteilung: **18.05.2011**
(21) Anmeldenummer: 07018341.3
(22) Anmeldetag: 19.09.2007
(51) Int. Cl.: B60N 3/02

(54) **Adaptervorrichtung für einen Haltegriff**
Adapter device for a handle
Dispositif d'adaptateur pour une poignée

(30) Priorität: 15.11.2006 DE 102006053781
(43) Veröffentlichungstag der Anmeldung: 03.09.2008
(73) Patentinhaber: Dr. Ing. h.c. F. Porsche AG, 70435 Stuttgart (DE)
(72) Erfinder: Benkler, Olaf, 75242 Neuhausen/Schellbronn (DE); Osswald, Markus, 71229 Leonberg-Höfingen (DE); Zierle, Matthias, 70794 Filderstadt (DE)

(56) Entgegenhaltungen:
- EP-A- 0 097 219
- EP-A- 0 720 934
- EP-A- 1 541 411
- DE-A1- 10 140 338

## Beschreibung

Die Erfindung betrifft eine Anordnung mit einem Halteelement und einer Adaptervorrichtung. Die Erfindung betrifft auch ein Kraftfahrzeug mit mindestens einer derartigen Anordnung mit einem Halteelement und einer Adaptervorrichtung.

Aus der DE 197 47 704 A1 ist beispielsweise eine Adaptervorrichtung bekannt, die als Lagereinheit für einen im Innenraum eines Fahrzeugs angeordneten, manuell erfassbaren Haltegriff ausgebildet ist, wobei die Lagereinheit aus einem fahrzeugfesten Basisteil und einem dagegen in einer möglichen Aufprallrichtung einer Person verschiebbar gehaltenen Lagerbockteil besteht, wobei zwischen dem Basisteil und dem Lagerbockteil wenigstens ein Deformationselement angebracht ist. Gemäß der DE 197 47 704 A1 wird weiterhin vorgeschlagen, einen als Griffbügel ausgebildeten Dachhaltegriff an zwei beabstandeten Lagerbockteilen zu halten, welche jeweils über ein Deformationselement verschiebbar gehalten sind. Diese Anordnung ist nur verhältnismäßig aufwändig zu montieren und birgt zudem die Gefahr, dass sich das Lagerbockteil während des Deformationsvorgangs im Basisteil verklemmt.

Die DE 101 40 338 A1 offenbart eine Adaptervorrichtung zur Anbringung eines Haltegriffs an einer Wand, bevorzugt im Fahrgastraum eines Kraftfahrzeugs, wobei die Adaptervorrichtung lang gestreckt ausgebildet ist mit einem zumindest teilweise im Wesentlichen umgekehrt U-förmigen Querschnitt, wobei der äußere U-Schenkel an der Wand festlegbar ist und an dem inneren U-Schenkel ein Haltegriff anbringbar ist, wobei der U-förmige Querschnitt aus mindestens zwei sich längs erstreckenden Teilprofilen zusammengesetzt ist.

Eine Anordnung mit einem Halteelement und einer Adaptervorrichtung der eingangs genannten Art soll möglichst derart ausgebildet sein, dass sie einerseits Zugkräfte aufnehmen kann, wenn sich eine Person an dem Haltegriff festhält oder an diesem zieht (Fall der normalen Benutzung). Andererseits soll eine derartige Anordnung mit einem Halteelement und einer Adaptervorrichtung möglichst viel Energie absorbieren, wenn ein Insasse eines Kraftfahrzeugs auf den Haltegriff, z.B. mit seinem Kopf, aufprallt (Crash-Fall).

Bekannte Adaptervorrichtungen weisen hinsichtlich ihrer Funktionalität zumindest in einem der beiden Belastungsfälle, d.h. im Fall der normalen Benutzung bzw. im Crash-Fall, deutliche Defizite auf.

Aus der EP 1 541 411 A ist eine Anordnung mit einem Halteelement und einer Adaptervorrichtung mit allen Merkmalen des Oberbegriffs des Anspruchs 1 bekannt.

Aufgabe der vorliegenden Erfindung ist es, eine Anordnung mit einem Halteelement und einer Adaptervorrichtung bereit zu stellen, welche die vorangehend genannten Nachteile vermeidet und gegenüber bekannten Adaptervorrichtungen dahingehend verbessert ist, dass eine hohe Stabilität für den Fall der normalen Benutzung bei deutlich verbesserten Deformationseigenschaften im Crash-Fall gegeben ist.

Diese Aufgabe wird erfindungsgemäß gelöst durch die Merkmale des unabhängigen Patentanspruchs 1. Vorteilhafte Weiterbildungen der Erfindung sind Gegenstand der abhängigen Patentansprüche.

Erfindungsgemäß weist eine Anordnung mit einem Halteelement und einer Adaptervorrichtung der eingangs genannten Art ein Deformationselement mit mindestens zwei Endbereichen auf, wobei die Endbereiche des Deformationselements durch mindestens einen Steg miteinander verbunden sind und die Endbereiche jeweils mindestens ein Befestigungselement für den Haltegriff aufweisen, wobei das Deformationselement derart ausgebildet ist, dass es in einem ersten Belastungsfall durch ein Halteelement gestützt wird, und dass es sich in einem zweiten Belastungsfall im Bereich des mindestens einen Stegs verformt. Derart kann ein Haltegriff im Hinblick auf eine Belastung in eine Zugrichtung, d.h. im Fall der normalen Benutzung, äußerst stabil gelagert werden, ohne dass die Energie absorbierenden Deformationseigenschaften der Adaptervorrichtung im Crash-Fall beeinträchtigt werden.

Dabei korrespondieren die Endbereiche des Deformationselements mit Öffnungen des Halteelements, wobei die Endbereiche im wesentlichen als Töpfe ausgebildet sind und Randbereiche aufweisen, die sich zumindest teilweise mit dem Halteelement überlappen. Durch die Erfindung kann die Stabilität der Adaptervorrichtung im Fall der normalen Benutzung weiter gesteigert werden, wobei das Deformationsverhalten im Crash-Fall zumindest nicht beeinträchtigt wird.

Um eine gezielte und funktionsgerechte Verformung im Crash-Fall sicherzustellen, kann mit Vorteil eine Soll-Knicklinie im Bereich des mindestens eines Stegs definiert sein.

Eine gewünschte, vordefinierte Verformbarkeit des Deformationselements kann mit Vorteil dadurch eingestellt werden, dass der mindestens eine Stegs des Deformationselements mindestens einen Rand aufweist, der eingekerbt ist, um eine Soll-Knicklinie zu definieren.

Weitere Einzelheiten und Vorteile der Erfindung werden nachfolgend anhand eines Ausführungsbeispiels unter Bezugnahme auf die Zeichnungen erläutert. Es zeigen, jeweils schematisch,
- Fig. 1: eine perspektivische Ansicht der Adaptervorrichtung,
- Fig. 2: eine perspektivische Ansicht des Deformationselements,
- Fig. 3: eine perspektivische Ansicht des Halteelements,
- Fig. 4: eine perspektivische Ansicht der Adaptervorrichtung und eines Karosserieteils,
- Fig. 5: einen Schnitt durch die Adaptervorrichtung mit Haltegriff.

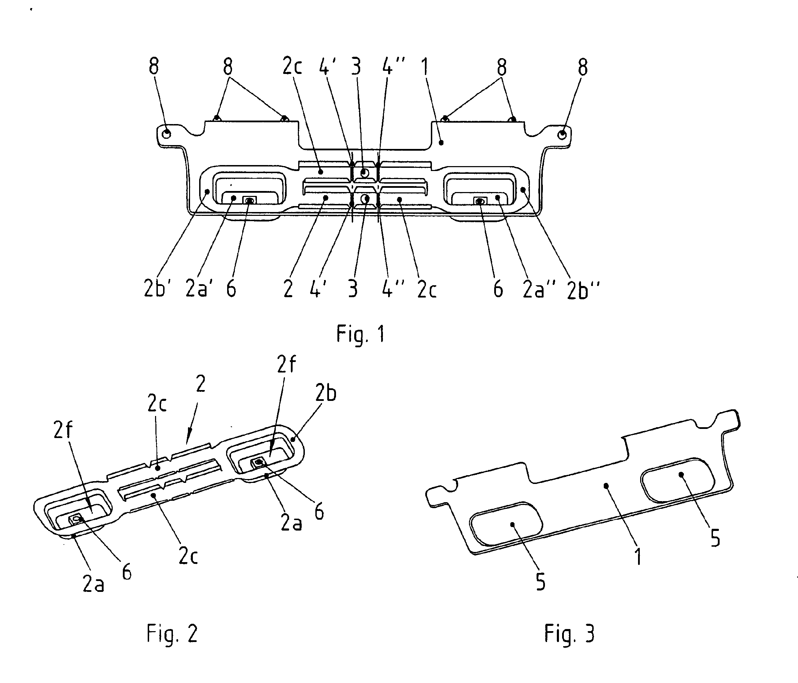

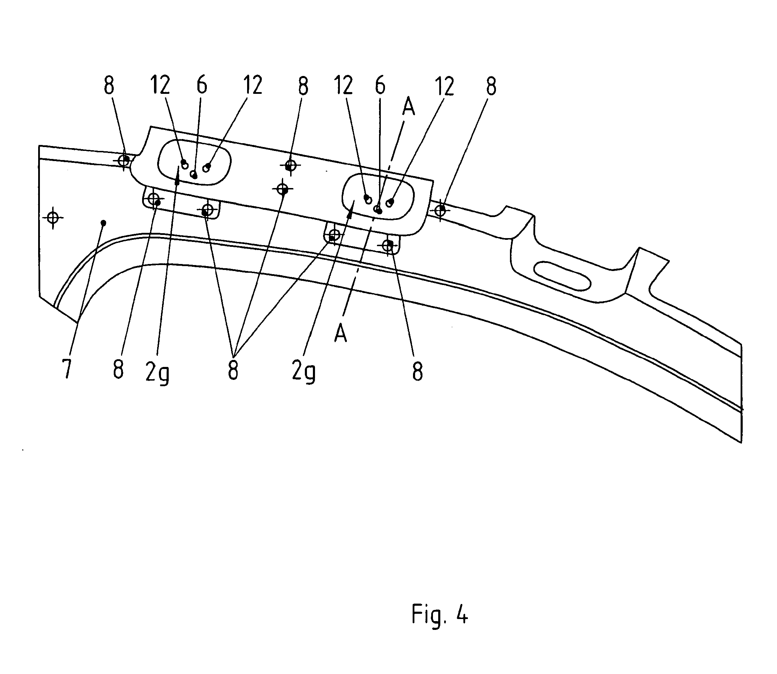

**Fig. 1** zeigt eine Adaptervorrichtung mit einem Halteelement 1 und mit einem Deformationselement 2 in perspektivischer Ansicht. Das eine Konsole ausbildende Haltelement 1 kann an Befestigungsstellen 8 mit einem Karosserieteil 7 (siehe Fig. 4) eines Kraftfahrzeugs verbunden sein.

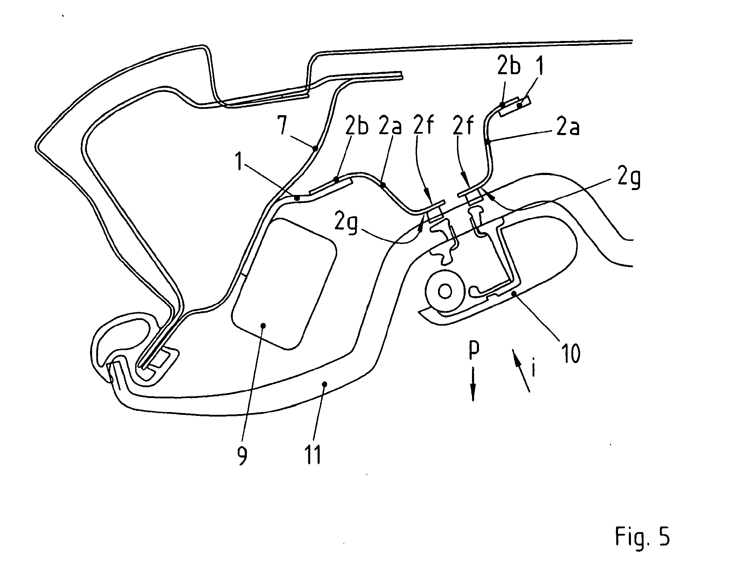

Das Deformationselement 2 weist zwei Endbereiche mit jeweils mindestens einem Befestigungselement 6 für einen Haltegriff 10 (siehe Fig. 5) auf. Der Haltegriff 10 kann vorzugsweise bügelförmig ausgebildet sein, wobei die Enden des bügelförmigen Haltegriffs an den Befestigungselementen 6 befestigt werden können. Die Befestigungselemente 6 sind beispielsweise als Befestigungsöffnungen ausgestaltet.

Das Deformationselement 2 ist in den Zeichnungen in seinem nicht deformierten Zustand dargestellt. Im gezeigten Beispiel weist das Deformationselement 2 zwei Endbereiche auf. Die mindestens zwei Endbereiche des Deformationselements 2 sind vorzugsweise als Töpfe 2a', 2a" ausgebildet. Die Töpfe 2a', 2a" sind derart angeordnet, dass sie Öffnungen 5 (siehe Fig. 3) des Halteelements 1 durchdringen. Die Töpfe 2a', 2a" weisen Randbereiche 2b', 2b" auf, wobei sich die Randbereiche 2b', 2b" mit dem Halteelement 1 überlappen bzw. auf dem Halteelement 1 aufliegen. Derart wird eine ungewünschte Verformung des Deformationselements 2 im Falle der normalen Benutzung unterbunden.

Das Deformationselement 2 weist ein oder mehrere, im gezeigten Beispiel zwei, Stege 2c auf, die die Endbereiche des Deformationselements 2 miteinander verbinden. Der mindestens eine Steg 2c des Deformationselements 2 kann mit dem Halteelement 1, z.B. in der Stegmitte, beispielsweise durch eine Punktschweißung 3 verbunden sein.

Um vordefinierte Verformungseigenschaften des Deformationselements 2 einzustellen ist der mindestens eine Steg 2c derart ausgebildet, dass ein oder mehrere Soll-Knicklinien 4', 4" definiert werden. Eine Soll-Knicklinie 4' bzw. 4" kann beispielsweise durch eine Verringerung der Materialstärke, durch veränderte Materialeigenschaften und/oder durch eine oder mehrere Einkerbungen bewirkt werden. Wie in den in Fig. 1 und 2 beispielhaft dargestellt, kann der mindestens eine Steg 2c des Deformationselements 2 Ränder aufweisen, die vorzugsweise gegenüber der Stegfläche abgewinkelt oder gebogen ausgebildet sind. Eine Soll-Knicklinie 4', 4" kann beispielsweise durch eine Einkerbung des Randes des Stegs 2c definiert werden.

Die Soll-Knicklinien 4' und 4" sind vorzugsweise den Endbereichen des Deformationselements 2, d.h. den Töpfen 2a' bzw. 2a", zugeordnet. So würde z.B. bei einem den rechten Topf 2a" stärker belastenden Aufschlag auch eine deutlich ausgeprägtere Verformung an den rechten Soll-Knicklinien 4" erfolgen als an den linken Soll-Knicklinien 4'.

**Fig. 2** zeigt das Deformationselement 2 mit zwei Stegen 2c, welche die Endbereiche des Deformationselements 2 verbinden. Die Endbereiche sind im gezeigten Beispiel als Töpfe 2a mit Randbereichen 2b ausgebildet. Die Töpfe 2a des Deformationselements 2 weisen Befestigungselemente 6 für einen Haltegriff 10 auf, wobei der Haltegriff 10 auf der einer Innenseite 2f der Töpfe 2a gegenüberliegenden Außenseite 2g (siehe Fig. 4 und 5) der Töpfe 2a befestigt werden kann.

**Fig. 3** zeigt das als Konsole ausgebildete Halteelement 1 in perspektivischer Ansicht. Das Halteelement 1 weist zwei Öffnungen 5 auf, die mit den Töpfen 2a (siehe Fig. 2) des Deformationselements 2 korrespondieren. Die Öffnungen 5 und die Töpfe 2a sind vorzugsweise hinsichtlich ihrer Form aneinander angepasst.

**Fig. 4** zeigt die Adaptervorrichtung befestigt an einem Karosserieteil 7 des Kraftfahrzeugs. Vorzugsweise ist die Adaptervorrichtung an den Befestigungsstellen 8 mit dem Karosserieteil 7 verbunden. Die Verbindung des Halteelements 1 mit dem Karosserieteil 7 ist vorzugsweise stoffschlüssig ausgeführt. Vorzugsweise wird das Halteelement 1 an den Befestigungsstellen 8 mit dem Rohbau des Kraftfahrzeugs verschweißt. Im gezeigten Beispiel ist die Adaptervorrichtung an einem Dachrahmen oberhalb der Tür eines Kraftfahrzeugs befestigt.

An der Außenseite 2g des Deformationselements 2 (siehe Fig. 1 und 2) sind die als Befestigungsöffnungen ausgebildeten Befestigungselemente 6 für den Haltgriff 10 (siehe Fig. 5) erkennbar. Insbesondere für einen z.B. bügelförmig ausgebildeten Haltegriff 10 kann eine Verdrehsicherung 12 vorgesehen sein.

**Fig. 5** zeigt einen Schnitt durch die Adaptervorrichtung und das Karosserieteil 7 nach Linie A-A in Fig. 4. Der Haltegriff 10 ist dabei schematisch in unbenutzter Stellung angedeutet. Der Haltegriff 10 ist an der Außenseite 2g des Topfs 2a des Deformationselements 2 befestigt. Die Innenseite 2f des Topfs 2a ist einem Karosserieteil 7 und der Fahrzeugaußenseite zugewendet.

Der Randbereich 2b des Topfs 2a und die in Fig. 5 nicht näher dargestellten Stege 2c (siehe Fig. 1 und 2) des Deformationselements 2 sind auf der Seite des Halteelements 1 angeordnet, die der Fahrzeugaußenseite zugewandt ist. Der Bodenbereich des Topfs 2a, mit seiner Innenseite 2f und seiner Außenseite 2g, ist auf der dem Fahrgastraum zugewandten Seite des Halteelements 1 angeordnet.

Bei einer Belastung in eine Zugrichtung p wird der Randbereich 2b des Topfs 2a gegen das Haltelement 1 gedrückt. Das Halteelement 1 ist durch seinen im Wesentlichen in Form eines Topfs 2a mit Randbereich 2b ausgebildeten Endbereich sowohl in Zugrichtung p als auch seitlich, d.h. senkrecht zur Zugrichtung p, stabil gelagert. Bei einer Belastung in Aufprallrichtung i kann das Deformationselement 2 nachgeben, da der Topf 2a in Aufprallrichtung i beweglich gelagert ist. Im Crash-Fall, erfolgt bei einer Belastung in Aufprallrichtung i eine Verformung des Deformationselements 2, insbesondere im Bereich der Knicklinien 4', 4" (siehe Fig. 1). Der Topf 2a, bzw. 2a', 2a" (siehe Fig. 1) wird dabei zunächst in Aufprallrichtung beschleunigt und beschreibt eine Bewegungsbahn um die entsprechende Knicklinie 4', 4". Die zur Verformung des Deformationselements erforderlich minimale Kraft in Aufprallrichtung i, kann durch eine entsprechende Ausgestaltung des mindestens einen Stegs 2c (siehe Fig. 1 und 2) bestimmt werden, z.B. durch eine entsprechende Ausbildung von Einkerbungen und/oder entsprechend ausgeprägte Materialeigenschaften. Das Halteelement 1 verformt sich im Crash-Fall vorzugsweise nicht. Bei entsprechend hoher Aufprallenergie wird das Deformationselement 2 mit den Töpfen 2a, 2a', 2a" im Crash-Fall zumindest nahezu vollständig auf die der Fahrzeugaußenseite zugewandte Seite des Halteelements 1 bewegt.

Die Adaptervorrichtung ist vorzugsweise derart angeordnet, dass sich zwischen der Adaptervorrichtung und dem Haltegriff 10 ein Formhimmel 11 des Fahrgastraums befindet. Zwischen dem Formhimmel 11 und einem Karosserieteil 7 ist vorzugsweise unterhalb der Adaptervorrichtung ein Luftsack 9 angeordnet.

## Patentansprüche

1. Anordnung mit einem Halteelement (1) und einer Adaptervorrichtung für einen Haltegriff (10) mit mindestens einem Deformationselement (2), wobei ein Deformationselement (2) mit mindestens zwei Endbereichen vorgesehen ist, wobei die Endbereiche des Deformationselements (2) durch mindestens einen Steg (2c) miteinander verbunden sind und jeweils mindestens ein Befestigungselement (6) für den Haltegriff (10) aufweisen, wobei das Deformationselement (2) derart ausgebildet ist, dass es in einem ersten Belastungsfall durch das Halteelement (1) gestützt wird und es sich in einem zweiten Belastungsfall im Bereich des mindestens einen Stegs (2c) verformt, wobei die Endbereiche des Deformationselements (2) mit Öffnungen (5) des Halteelements (1) korrespondieren und wobei die Endbereiche Randbereiche (2b, 2b', 2b") aufweisen, die sich zumindest teilweise mit dem Halteelement (1) überlappen, **dadurch gekennzeichnet, dass** die Endbereiche im Wesentlichen als Töpfe (2a, 2a', 2a") ausgebildet sind.

2. Anordnung mit einem Halteelement (1) und einer Adaptervorrichtung nach Anspruch 1, wobei zur Verformung des Deformationselements (2) im zweiten Belastungsfall mindestens eine Soll-Knicklinie (4', 4") im Bereich des mindestens einen Stegs (2c) definiert ist.

3. Anordnung mit einem Halteelement (1) und einer Adaptervorrichtung nach Anspruch 2, wobei der mindestens eine Steg (2c) mindestens einen Rand aufweist, der zum Definition der mindestens einen Soll-Knicklinie (4', 4") eingekerbt ist.

4. Anordnung mit einem Halteelement (1) und einer Adaptervorrichtung nach Anspruch 2 oder 3, wobei die Soll-Knicklinie (4', 4") durch eine Verringerung der Materialstärke des mindestens einen Stegs (2c) definiert wird.

5. Anordnung mit einem Halteelement (1) und einer Adaptervorrichtung nach einem der vorangehenden Ansprüche, wobei jedem Endbereich der Adaptervorrichtung mindestens eine Soll-Knicklinie (4' bzw. 4") zugeordnet ist.

6. Anordnung mit einem Halteelement (1) und einer Adaptervorrichtung nach einem der vorangehenden Ansprüche, wobei das Deformationselement (2) in der Mitte des mindestens einen Stegs (2c) mit dem Halteelement (1) verbunden ist.

7. Kraftfahrzeug mit mindestens einer Anordnung nach einem der vorangehenden Ansprüche, wobei der Haltegriff (10) an den Endbereichen der Adaptervorrichtung befestigt ist, und wobei das Halteelement (1) der Adaptervorrichtung an einem Karosserieteil (7) des Kraftfahrzeugs befestigt ist.

## Claims

1. Arrangement with a retaining element (1) and an adapter device for a grab handle (10), with at least one deformation element (2), wherein a deformation element (2) is provided with at least two end regions, wherein the end regions of the deformation element (2) are connected to each other by at least one web (2c) and each have at least one fastening element (6) for the grab handle (10), wherein the deformation element (2) is designed in such a manner that, in a first loading situation, it is supported by the retaining element (1) and, in a second loading situation, is deformed in the region of the at least one web (2c), wherein the end regions of the deformation element (2) correspond to openings (5) in the retaining element (1), and wherein the end regions have edge regions (2b, 2b', 2b") which at least partially overlap with the retaining element (1), **characterized in that** the end regions are substantially designed as cups (2a, 2a', 2a'').

2. Arrangement with a retaining element (1) and an adapter device according to Claim 1, wherein at least one predetermined buckling line (4', 4") is defined in the region of the at least one web (2c) for the deformation of the deformation element (2) in the second loading situation.

3. Arrangement with a holding element (1) and an adapter device according to Claim 2, wherein the at least one web (2c) has at least one edge which is notched for the definition of the at least one predetermined buckling line (4', 4").

4. Arrangement with a retaining element (1) and an adapter device according to Claim 2 or 3, wherein the predetermined buckling line (4', 4") is defined by a reduction in the material thickness of the at least one web (2c).

5. Arrangement with a retaining element (1) and an adapter device according to one of the preceding claims, wherein each end region of the adapter device is assigned at least one predetermined buckling line (4' or 4").

6. Arrangement with a retaining element (1) and an adapter device according to one of the preceding claims, wherein the deformation element (2) is connected in the centre of the at least one web (2c) to the retaining element (1).

7. Motor vehicle with at least one arrangement according to one of the preceding claims, wherein the grab handle (10) is fastened to the end regions of the adapter device, and wherein the retaining element (1) of the adapter device is fastened to a body part (7) of the motor vehicle.

## Revendications

1. Arrangement comprenant un élément de maintien (1) et un dispositif adaptateur pour une poignée (10) comportant au moins un élément déformable (2), dans lequel il est prévu au moins un élément déformable (2) avec au moins deux régions d'extrémité, dans lequel les régions d'extrémité de l'élément déformable (2) sont reliées l'une à l'autre par au moins une âme (2c) et présentent respectivement au moins un élément de fixation (6) pour la poignée (10), dans lequel l'élément déformable (2) est réalisé de telle manière que, dans un premier cas de sollicitation, il soit soutenu par l'élément de maintien (1) et que, dans un deuxième cas de sollicitation, il se déforme dans la région de ladite au moins une âme (2c), dans lequel les régions d'extrémité de l'élément déformable (2) correspondent à des ouvertures (5) de l'élément de maintien (1) et dans lequel les régions d'extrémité présentent des régions de bord (2b, 2b', 2b") qui se recouvrent au moins partiellement avec l'élément de maintien (1), **caractérisé en ce que** les régions d'extrémité sont réalisées essentiellement en forme de godets (2a, 2a', 2a").

2. Arrangement comprenant un élément de maintien (1) et un dispositif adaptateur selon la revendication 1, dans lequel au moins une ligne de pliage préférentiel (4', 4") est définie dans la région de ladite au moins une âme (2c) pour la déformation de l'élément déformable (2) dans le deuxième cas de sollicitation.

3. Arrangement comprenant un élément de maintien (1) et un dispositif adaptateur selon la revendication 2, dans lequel ladite au moins une âme (2c) présente au moins un bord, qui est entaillé pour définir ladite au moins une ligne de pliage préférentiel (4', 4").

4. Arrangement comprenant un élément de maintien (1) et un dispositif adaptateur selon la revendication 2 ou 3, dans lequel la ligne de pliage préférentiel (4', 4") est définie par une diminution de l'épaisseur de matière de ladite au moins une âme (2c).

5. Arrangement comprenant un élément de maintien (1) et un dispositif adaptateur selon l'une quelconque des revendications précédentes, dans lequel au moins une ligne de pliage préférentiel (4' ou 4") est associée à chaque région d'extrémité du dispositif adaptateur.

6. Arrangement comprenant un élément de maintien (1) et un dispositif adaptateur selon l'une quelconque des revendications précédentes, dans lequel l'élément déformable (2) est relié à l'élément de maintien (1) au milieu de ladite au moins une âme (2c).

7. Véhicule automobile avec au moins un arrangement selon l'une quelconque des revendications précédentes, dans lequel la poignée (10) est fixée aux régions d'extrémité du dispositif adaptateur, et dans lequel l'élément de maintien (1) du dispositif adaptateur est fixé à une partie de carrosserie (7) du véhicule automobile.
